(19) **Europäisches Patentamt**
**European Patent Office**
**Office européen des brevets**

(11) **EP 3 460 534 B1**

(12) **FASCICULE DE BREVET EUROPEEN**

(45) Date de publication et mention
de la délivrance du brevet:
**21.10.2020 Bulletin 2020/43**

(51) Int Cl.:
*G01W 1/12* *(2006.01)*

(21) Numéro de dépôt: **18195709.3**

(22) Date de dépôt: **20.09.2018**

(54) **PROCÉDÉ ET DISPOSITIF DE DÉTERMINATION INDIRECTE D'UN FLUX SOLAIRE INCIDENT**

VERFAHREN UND VORRICHTUNG ZUR INDIREKTEN BESTIMMUNG EINES EINFALLENDEN SOLARSTROMS

METHOD AND DEVICE FOR THE INDIRECT DETERMINATION OF AN INCIDENT SOLAR FLUX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2017 FR 1758788**

(43) Date de publication de la demande:
**27.03.2019 Bulletin 2019/13**

(73) Titulaire: **Electricité de France**
**75008 Paris (FR)**

(72) Inventeurs:
• **NABIL, Tahar**
**77818 MORET SUR LOING (FR)**
• **JICQUEL, Jean-Marc**
**77818 MORET SUR LOING (FR)**
• **GIRARD, Alexandre**
**92500 RUEIL-MALMAISON (FR)**
• **ROUEFF, François**
**75634 PARIS CEDEX 13 (FR)**

(74) Mandataire: **Regimbeau**
**20, rue de Chazelles**
**75847 Paris Cedex 17 (FR)**

(56) Documents cités:
**EP-A2- 2 505 831      WO-A1-02/38284
KR-B1- 101 584 157**

**Description**

**DOMAINE TECHNIQUE DE L'INVENTION**

La présente invention s'inscrit dans le domaine de l'estimation du rayonnement solaire incident, par exemple dans le cadre de la construction d'un modèle énergétique d'une structure.

Que ce soit pour construire un modèle prédictif du flux solaire incident attendu futur (par exemple, pour prévoir les performances opérationnelles de panneaux photovoltaïques), pour reconstituer un flux solaire reçu à des périodes passées, ou encore pour estimer en temps réel le flux solaire incident, il est très avantageux de disposer d'une mesure dynamique de flux solaire incident.

**ETAT DE LA TECHNIQUE**

La solution la plus répandue pour fournir une mesure précise de flux solaire consiste à utiliser un pyranomètre, fournissant une mesure directe de la puissance de rayonnement solaire reçue. A titre d'exemple, la publication Modeling and forecasting hourly global solar radiation using clustering and classification techniques, P. Jiménez-Perez, L. Mora-López, Solar Energy, vol. 135, pp. 682-691, 2016, propose de réaliser des mesures in situ de flux solaire incident à l'aide d'un pyranomètre, servant ensuite de données d'entraînement pour construire un modèle statistique du flux solaire par apprentissage. Toutefois, ce modèle est très spécifique est n'est valide que pour le site d'implantation du pyranomètre. Le principal inconvénient d'un tel protocole est de nécessiter un pyranomètre pour chaque emplacement pour lequel on souhaite obtenir un modèle de flux solaire, le coût d'un pyranomètre étant prohibitif. En pratique, les stations météorologiques standard ne comprennent que rarement un pyranomètre. Il existe donc un besoin pour une solution d'estimation du flux solaire incident qui ne nécessite pas un pyranomètre, et qui puisse être mise en œuvre dans des dispositifs mis à disposition d'un public large. Les publications Solar irradiance forecasting using spatial-temporal covariance structures and time-forward kriging, D. Yang, C. Gu, Z. Dong, P. Jirutitijaroen, N. Chen et W. M. Walsh, Renewable Energy, pp. 235-245, 2013, et Spatio-temporal kriging of solar radiation incorporating direction and speed of cloud movement, T. Inoue, T. Sasaki et T. Washio, The 26th Annual Conférence of the Japanese Society for Artificial Intelligence, Yamaguchi City, 2012, décrivent, pour la construction d'un modèle du flux solaire incident sur un territoire, des méthodes de krigeage (méthodes géostatistiques d'estimation des caractéristiques d'un élément de volume) fournissant un modèle statistique spatial ou spatio-temporel. Un modèle spatio-temporel de dépendance statistique du flux solaire est appris à partir d'un nombre réduit de pyranomètres fournissant des données en temps réel de flux solaire, le modèle ainsi appris pouvant ensuite prédire le flux solaire sur un emplacement non doté d'un pyranomètre. Une telle méthode de krigeage permet de s'affranchir de la nécessité d'un pyranomètre pour chaque point où l'on souhaite obtenir une donnée de flux solaire. Cependant, la qualité d'un tel modèle dépend de la densité spatiale du maillage des pyranomètres pendant la phase d'apprentissage. Ainsi, un nombre élevé de pyranomètres reste nécessaire pour disposer d'un modèle dynamique pertinent pour le flux solaire incident.

Des solutions ont été proposées pour fournir une estimation indirecte du flux solaire incident, ne nécessitant pas de pyranomètre. Un modèle prédictif du flux solaire utilisant des données de température est décrit dans la publication Potential of radial basis function based support vector regression for global solar radiation prediction, Z. Ramedani, M. Omid, A. Keyhani, S. Shamshirband et B. Khoshnevisan, Renewable and Sustainable Energy Reviews, vol. 39, pp. 1005-1011, 2014. Cette solution consiste à utiliser un unique capteur de température extérieure, et à relever au cours d'une journée le minimum et le maximum de température mesurés par ledit capteur. La différence de ces valeurs est exploitée pour prédire, par apprentissage artificiel, des valeurs journalières ou mensuelles de flux solaire. Toutefois, un tel modèle prédictif ne permet pas une modélisation dynamique du flux solaire avec la précision temporelle nécessaire.

Par ailleurs, il est connu d'évaluer une approximation du flux solaire horizontal global, en fonction notamment d'une valeur d'angle azimutal et d'une valeur de couverture nuageuse, aussi dite nébulosité.

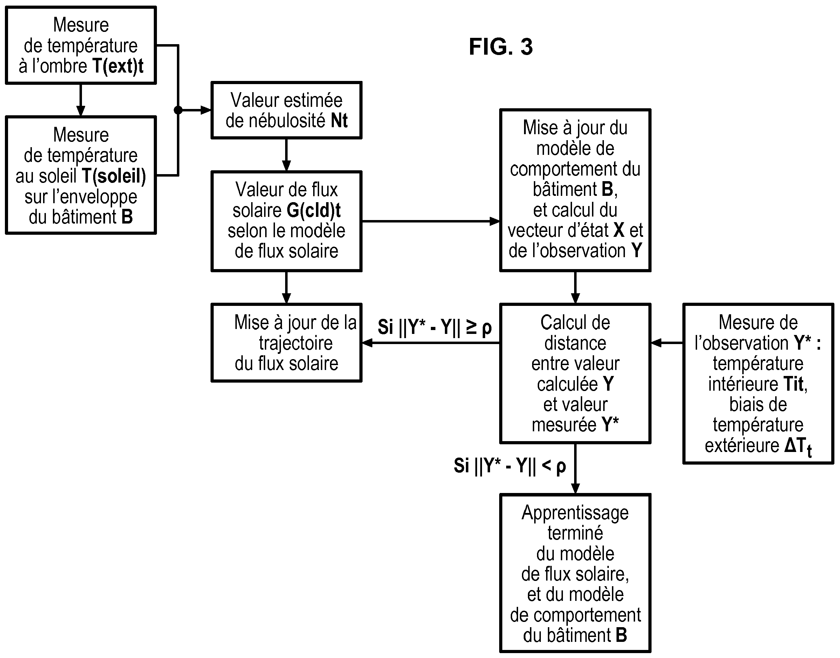

A titre d'exemple, la publication Development and validation of a gray box model to predict thermal behavior of occupied office buildings, T. Berthou, P. Stabat, R. Salvazet, D. Marchio, Energy and Buildings, pp.91-100, 2014, décrit des modélisations du comportement thermique d'un bâtiment exposé à un rayonnement solaire. Dans le cadre de ces modélisations, un modèle simplifié du flux solaire incident est utilisé (voir figure 3 du document). Le gain du flux solaire dans ce modèle est précisé dans la publication Développement de modèles de bâtiment pour la prévision de charge de climatisation et l'élaboration de stratégies d'optimisation énergétique et d'effacement, T. Berthou, Ecole Nationale Supérieure des Mines de Paris, 2013. Ce modèle prend en entrée des données de nébulosité fournies en temps réel à l'aide de mesures météorologiques, ainsi que des données de géométrie, d'orientation et de masques solaires du bâtiment étudié. Un dispositif de commande du chauffage d'un bâtiment exploitant la solution proposée devrait donc être alimenté en temps réel avec des données de nébulosité et des paramètres caractéristiques du bâtiment. Cette solution est inadaptée à une utilisation grand public.

La demande de brevet européen EP 2 505 831 décrit un dispositif de mesure du flux solaire incident sur une éolienne, exploitant les liens entre la valeur du flux solaire incident sur un capteur agencé dans la tête de l'éolienne, la température mesurée en ce capteur, et une valeur de nébulosité. Toutefois, la démarche décrite dans ce document consiste à estimer une valeur de la nébulosité, en vue de détecter une accumulation de glace au niveau des parties mobiles de l'éolienne. Cette démarche nécessite une mesure directe du flux solaire incident via un pyranomètre.

Par ailleurs, la demande internationale WO 02/38284, portant sur une centrale de régulation de l'irrigation, décrit, dans le but de calculer un taux d'évapotranspiration, une estimation de flux solaire incident à partir d'une différence de température entre un capteur situé au soleil et un capteur situé à l'ombre. Cependant, ce document ne fournit pas un moyen de construire un modèle dynamique de flux solaire qui soit fonction de cette différence de température, et tenant compte des conditions météorologiques.

L'état de l'art ne fournit donc pas de solution satisfaisante pour une estimation indirecte de flux solaire incident, rendant compte de la dynamique infra-horaire de l'évolution du flux solaire, sans nécessiter la fourniture de données météorologiques (sans que de telles données ne doivent être fournies en temps réel, s'il s'agit d'estimer en temps réel le flux solaire), ni l'utilisation de dispositifs peu répandus et onéreux.

## PRESENTATION GENERALE DE L'INVENTION

La présente invention pallie les difficultés relevées ci-avant, par la fourniture, selon un premier aspect, d'un dispositif de détermination indirecte d'un flux solaire incident sur une structure, comprenant des moyens de calcul de flux solaire selon un modèle théorique de flux solaire tenant compte d'une valeur courante de nébulosité, le dispositif comprenant un premier capteur de température extérieure situé à un emplacement exposé au rayonnement solaire, et un deuxième capteur de température extérieure situé à l'ombre, les moyens de calcul recevant en entrée une valeur de biais de température, définie comme la différence entre les températures mesurées par le premier capteur et le deuxième capteur, et étant configurés pour réaliser une estimation de la valeur de nébulosité en fonction de ladite valeur de biais de température.

Un dispositif selon l'invention exploite donc un modèle simplifié du flux solaire incident, corrigé avec une valeur courante de nébulosité. Un tel dispositif est capable de réaliser de manière autonome la détermination de cette valeur de nébulosité, en exploitant des mesures de température fournies par un capteur au soleil et un capteur à l'ombre. Cette solution est d'implémentation simple, puisque reposant sur de simples capteurs de température extérieure, et sur un modèle de variation de la nébulosité. Une fois le modèle théorique de flux solaire appris (c'est-à-dire une fois déterminées des valeurs satisfaisantes des paramètres du modèle), ce modèle permet de s'affranchir d'une mesure directe du flux solaire par un pyranomètre.

Un dispositif conforme à l'invention peut présenter en outre, de manière optionnelle et non limitative, les caractéristiques suivantes :

- Le dispositif comprend en outre une base de données configurée pour construire un modèle dynamique de flux solaire,
  ledit modèle dynamique étant construit par apprentissage d'un modèle d'évolution temporelle dynamique du biais de température ;
- L'apprentissage du modèle dynamique de flux solaire est réalisé conjointement à un apprentissage d'un modèle de comportement de la structure, la valeur courante du flux solaire étant une donnée d'entrée pour la détermination du comportement de la structure,
  le modèle dynamique de flux solaire et le modèle de comportement de la structure étant construits à l'aide des mesures réalisées par le premier capteur et le deuxième capteur ;
- La structure est un bâtiment, et le modèle de comportement est un modèle thermique du bâtiment ;
- Dans ce dernier cas, le dispositif comprend en outre une sonde de température intérieure du bâtiment ;
- Toujours dans ce dernier cas, le dispositif comprend en outre un compteur de consommation électrique ou un compteur de consommation de gaz du bâtiment ;
- Toujours dans ce dernier cas, le modèle thermique du bâtiment est linéaire, et correspond de préférence à un modèle électrique équivalent de type RxCy ;
- La structure est un panneau photovoltaïque, le dispositif de détermination de flux solaire s'interfaçant avec un dispositif de commande du panneau photovoltaïque ;
- La structure est une centrale solaire thermodynamique à miroirs, la centrale à miroirs présentant une pluralité de blocs de miroirs,
  le dispositif de détermination de flux solaire s'interfaçant avec une pluralité de dispositifs de commande d'orientation de miroirs ;
- Le dispositif comprend pour chaque bloc de miroirs au moins un capteur de température extérieure situé à un emplacement exposé au soleil.

Selon un deuxième aspect, l'invention concerne un procédé de détermination indirecte du flux solaire incident sur une structure, qui comprend les étapes suivantes :

mesure de température par un premier capteur de température extérieure situé à un emplacement exposé au rayonnement solaire, et par un deuxième capteur de température extérieure situé à l'ombre, et détermination d'une valeur de biais de température, définie comme la différence entre les deux températures mesurées,
estimation, par des moyens de calcul, d'une valeur courante de nébulosité en fonction de ladite valeur de biais de température,
et calcul par lesdits moyens de calcul d'une valeur du flux solaire incident sur la structure, d'après un modèle théorique de flux solaire prédéterminé, ledit modèle tenant compte de la valeur courante de nébulosité.

Un procédé conforme à l'invention peut présenter en outre, de manière optionnelle et non limitative, les caractéristiques suivantes :

- Le flux solaire incident calculé Gcld est exprimé en fonction de la valeur de nébulosité N et d'un flux solaire par temps clair $G_{clr}$ selon le modèle suivant

$$G_{cld} = G_{clr}\left(1 - aN^b\right),$$

où le flux solaire par temps clair $G_{clr}$ peut être déterminé en fonction de coordonnées géographiques des capteurs de température, et d'un repérage temporel de la mesure, a et b étant des paramètres à déterminer pour le modèle théorique de flux solaire ;
- L'estimation de la valeur de nébulosité N en fonction de la valeur de biais de température ΔT est alors réalisée selon le modèle suivant :

$$N = \phi(\Delta T),$$

avec Φ la fonction suivante :

$$\phi(x) = 1 - \frac{1}{1 + \exp\left(-\alpha(x - x_0)\right)}$$

avec $x_0 = (x_1 + x_2)/2$, et $\alpha = 4/(x_2 - x_1)$,
où $x_1$ et $x_2$ sont des valeurs seuil à déterminer pour le modèle de la nébulosité ;
- Le procédé comporte une étape préliminaire de détermination de paramètres du modèle théorique du flux solaire à l'aide d'une mesure directe de flux solaire incident dans une zone géographique étendue, les paramètres déterminés étant pris égaux sur toute la zone géographique étendue ;
- Le modèle théorique de flux solaire est un modèle dynamique, ledit modèle dynamique étant construit par apprentissage d'un modèle d'évolution temporelle dynamique du biais de température ;
- Dans ce dernier cas, le modèle d'évolution temporelle dynamique du biais de température $\Delta T_t$ selon le temps t est le modèle d'état linéaire à temps discret comme suit :

$$\Delta T_t = \eta_t + w_t,$$

avec wt un bruit blanc gaussien de variance r² avec r un paramètre à déterminer,
et avec $\eta_t = \eta_{t-1} + (q + \sigma_t)v_t,$

où $(q+\sigma_t)v_t$ est un bruit d'innovation, c'est-à-dire un bruit permettant d'introduire de la variabilité dans la dynamique de l'état $\eta_t$, q étant un écart-type minimal à déterminer,
vt est un bruit blanc gaussien unitaire,
et $\sigma_t$ est un paramètre à déterminer,
ledit modèle d'état linéaire à temps discret du biais de température étant paramétré par un vecteur $(q,r,\sigma_1,...,\sigma_T)$ avec T le nombre de mesures réalisées pour le biais de température,
ledit vecteur étant déterminé par minimisation d'un critère de vraisemblance associé au modèle d'évolution temporelle dynamique du biais de température ;

- Le procédé est mis en œuvre de manière simultanée ou séquentielle pour la détermination du flux solaire incident en une pluralité de points d'une zone, avec une estimation de nébulosité pour chacun de ladite pluralité de points, et comprend une étape supplémentaire d'estimation d'une vitesse de déplacement des nuages au-dessus de ladite zone, cette étape supplémentaire prenant en entrée les estimations de nébulosité en chacun des points.

## PRESENTATION GENERALE DES FIGURES

D'autres caractéristiques, buts et avantages de l'invention ressortiront de la description qui suit, qui est purement illustrative et non limitative, accompagnée des dessins annexés suivants :

La **figure 1** illustre schématiquement les étapes d'un procédé de détermination indirecte de flux solaire incident conforme à l'invention, selon un mode de réalisation.
La **figure 2** est un schéma d'un dispositif de détermination indirecte de flux solaire incident conforme à l'invention, selon un mode de réalisation particulier pour la détermination du flux solaire incident sur un bâtiment.
La **figure 3** est un schéma fonctionnel de l'apprentissage conjoint d'un modèle dynamique de flux solaire et d'un modèle de comportement thermique de bâtiment, à l'aide du dispositif illustré en figure 2.
La **figure 4** est un schéma électrique d'un modèle de circuit électrique R3C2 équivalent, pour la simulation du comportement thermique d'un bâtiment, pouvant être utilisé en relation au procédé illustré en figure 2.

## DESCRIPTION DETAILLEE DE MODES DE REALISATION

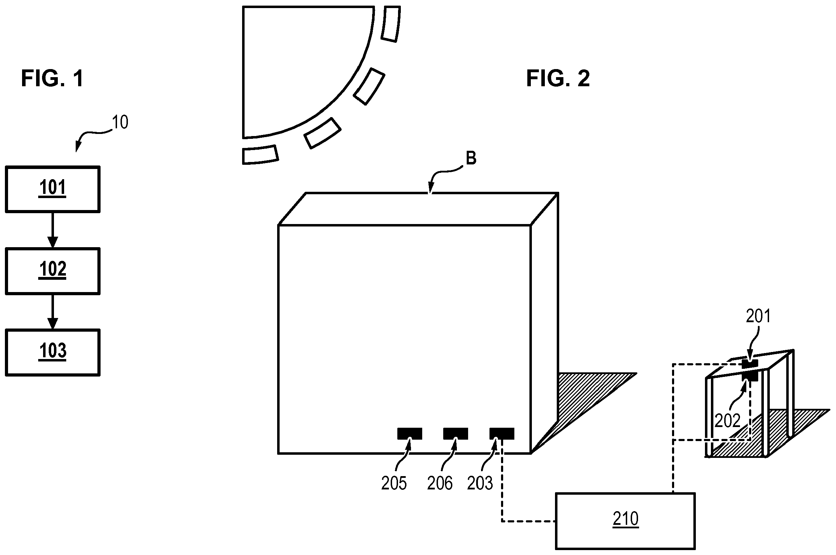

Un procédé 10 de détermination indirecte de flux solaire incident selon un mode de réalisation de l'invention est illustré en **figure 1.**

Le procédé 10 de la figure 1 est mis en œuvre par un dispositif placé en extérieur, comprenant un premier capteur de température extérieure situé à un emplacement exposé au rayonnement solaire, et un deuxième capteur de température extérieure situé à l'ombre, ainsi que des moyens de calcul de flux solaire selon un modèle théorique de flux solaire. Les deux capteurs sont situés à proximité l'un de l'autre.

Les moyens de calcul sont préférentiellement formés d'un processeur, ou alternativement de tout autre dispositif informatique capable d'exécuter des calculs et d'en mémoriser les résultats. Les moyens de calcul sont capables de communiquer, par une connexion filaire ou une liaison sans fil, avec les capteurs de température. Pour lesdits capteurs, on pourra utiliser de simples sondes de température capables ou non d'afficher sous forme lisible la température détectée. Alternativement, on pourra utiliser tout autre dispositif capable de remplir des fonctions autres qu'un simple relevé de température, comme éventuellement un pyranomètre (notamment durant une phase d'apprentissage du modèle théorique de flux solaire paramétré dans les moyens de calcul).

On place l'un des capteurs de température à une localisation toujours ombragée, et l'autre de ces capteurs à une localisation exposée au soleil sur la plus large plage d'ensoleillement possible, qui ne soit pas située dans l'ombre d'un quelconque obstacle.

Le flux solaire incident calculé par les moyens de calcul est ici noté $G_{cld}$ - pour « cloud », par opposition à $G_{clr}$ qui désigne le flux solaire qui serait observé pour un temps parfaitement clair. Le procédé 10 de la figure 1 pour la détermination indirecte du flux solaire incident comprend :

- Une étape 101 de mesure de température par les deux capteurs de température, suivie d'une détermination (par les moyens de calcul, ou bien par les capteurs eux-mêmes s'ils sont aptes à communiquer entre eux) d'une valeur $\Delta T$ de biais de température, définie comme la différence entre les deux températures mesurées, exprimée par exemple en degrés Celsius ;
- Une étape 102 d'estimation, par les moyens de calcul, d'une valeur courante de nébulosité N en fonction de la valeur $\Delta T$ de biais de température ;
- Une étape 103 de calcul par les moyens de calcul de la valeur $G_{cld}$ du flux solaire incident sur la structure, d'après le modèle théorique du flux solaire. Le flux solaire calculé pourra être exprimé en Watts par mètre carré.

On pourra utiliser tout modèle théorique permettant d'exprimer le flux solaire incident en fonction de la nébulosité.

De manière avantageuse, les moyens de calcul peuvent être configurés pour calculer le flux solaire incident selon le modèle de Perrin de Brichambaut et Vauge, le flux solaire étant, dans ce modèle, corrigé par la valeur de nébulosité N correspondant à la couverture nuageuse au niveau des capteurs.

Le modèle de Perrin de Brichambaut et Vauge s'exprime comme suit :

$$G_{clr} = \kappa \, G_0 (\cos \theta_z)^{1,15}$$

où $\kappa$ est un coefficient fixé à 0,81 dans la littérature, $\theta_z$ est l'angle azimutal (mesuré par exemple par rapport à la direction septentrionale), et Go est la constante solaire extraterrestre, c'est-à-dire la radiation théorique en l'absence d'atmosphère terrestre.

Un intérêt de ce modèle est qu'il dépend uniquement du repérage géographique (latitude, longitude) des capteurs, et du repérage temporel de la mesure, pour calculer l'angle azimutal et la radiation théorique. A ce titre, voir la publication Solar engineering of thermal processes, J. A. Duffie et W. A. Beckman, 4th éd., Wiley New York, 2013.

Ce modèle est ensuite corrigé par une mesure N $\in$ [0,1] de la nébulosité, ou couverture nuageuse, avantageusement selon l'expression suivante :

$$G_{cld} = G_{clr}(1 - aN^b),$$

où a et b sont des coefficients à déterminer pouvant être fixés, ou bien évoluer au fil des mesures (notamment lors d'un apprentissage du modèle).

Une fraction (1-a) du flux solaire par temps clair $G_{clr}$ est ainsi conservée dans le cas d'un ciel complètement couvert, correspondant à une valeur de nébulosité N = 1.

Il convient donc pour utiliser ce modèle de disposer d'une valeur fiable de la nébulosité. Toutefois, cette valeur peut ne pas être disponible de manière simple en temps réel.

A l'étape 102 du procédé 10, la valeur courante de la nébulosité N est estimée en fonction du biais de température $\Delta T$ mesuré. Les moyens de calcul peuvent par exemple être configurés pour obtenir une valeur de nébulosité N = $\Phi(\Delta T)$ avec $\Phi$ la fonction suivante :

$$\phi(x) = 1 - \frac{1}{1 + \exp\left(-\alpha(x - x_0)\right)}$$

avec $x_0 = (x_1 + x_2)/2$ et $\alpha = 4/(x_2 - x_1)$.

Les valeurs $x_1$ et $x_2$ sont ici des valeurs seuil pouvant être fixées, ou bien évoluer au fil des mesures (notamment lors d'un apprentissage du modèle). Ces valeurs sont ici telles que :

- Pour un ciel clair, donc une valeur de nébulosité N avoisinant 0, le biais de température soit strictement supérieur à $x_2$,
- Pour un ciel très couvert, donc une valeur de nébulosité N avoisinant 1, le biais de température soit strictement inférieur à $x_1$.

De manière avantageuse, notamment dans le modèle décrit ci-avant dans le cas où certains paramètres sont destinés à évoluer au fil des mesures, le dispositif mettant en œuvre le procédé 10 peut comprendre en outre une base de données configurée pour construire le modèle dynamique de flux solaire par apprentissage d'un modèle d'évolution temporelle dynamique du biais de température.

Dans toute la description qui va suivre, nous allons décrire trois cas d'application différents du modèle de Perrin de Brichambaut et Vauge précédemment considéré, comprenant un apprentissage d'un modèle théorique de flux solaire, l'apprentissage étant réalisé par des itérations successives d'un procédé de détermination indirecte de flux incident semblable à celui de la figure 1. Les grandeurs auxquelles il est fait référence ci-après, notamment des températures ou des valeurs de flux solaire, peuvent porter un indice « t » pour indiquer leur dépendance selon le temps (grandeur mesurée à l'instant t). Cependant, des références de grandeur dans lesquelles figure ou ne figure pas cet indice désignent bien la même grandeur.

*Apprentissage conjoint d'un modèle de flux solaire incident sur un bâtiment, et d'un modèle de comportement thermique dudit bâtiment*

Dans un premier mode de réalisation, la structure est un bâtiment. Des paramètres à déterminer lors de l'apprentissage du modèle de flux solaire sont les paramètres a, b, $x_1$ et $x_2$ tels que définis ci-avant. Un objectif est ici de reconstituer le flux solaire incident au niveau du bâtiment lors de périodes temporelles passées. Un autre objectif éventuel est de prédire, à partir du modèle de flux solaire, l'évolution de la température intérieure du bâtiment. Le procédé d'apprentissage qui sera décrit ci-après pourrait, alternativement, être mis en œuvre avec d'autres modèles théoriques de flux solaire incident, dont des paramètres seraient à déterminer.

De manière très avantageuse, le modèle théorique de flux solaire incident est appris conjointement à un modèle de comportement thermique du bâtiment, modélisant de manière dynamique l'évolution d'une température intérieure Ti du bâtiment et d'une température de structure $T_s$ représentative de l'enveloppe du bâtiment. Un choix préférentiel de modèle thermique de bâtiment sera décrit ci-après. Par apprentissage, on entend que des paramètres dudit modèle sont optimisés au fil des mesures de manière automatique, par un algorithme implémenté au sein des moyens de calcul, ou au sein d'un processeur distant pouvant communiquer avec les moyens de calcul par tout moyen.

Dans ce cas préférentiel, un modèle d'évolution dynamique des températures $T_i$ et $T_s$, correspondant au modèle de comportement thermique du bâtiment, interagit avec un modèle d'évolution dynamique du biais de température défini par la différence entre la température $T_{ext}$ d'un capteur de température extérieure toujours situé à l'ombre, et la température $T_{soleil}$, prise par un second capteur de température extérieure, exposé au soleil. Le modèle dynamique de flux solaire et le modèle de comportement de la structure sont donc construits itérativement au fil des mesures réalisées par le capteur de température $T_{ext}$ et le capteur de température $T_{soleil}$. La valeur du flux solaire selon le modèle de flux solaire est une donnée d'entrée pour la détermination du comportement thermique de la structure.

Le procédé d'apprentissage du premier mode de réalisation, pour le comportement thermique d'un bâtiment B, comprenant la détermination d'un flux solaire incident $G_{(cld)t}$ sur le bâtiment B en tenant compte de la nébulosité Nt à l'instant t, est mis en œuvre à l'aide d'un dispositif illustré en **figure 2.**

De manière préférentielle, deux phases d'apprentissage sont à distinguer : une phase d'apprentissage préliminaire au cours de laquelle des valeurs de paramètres du modèle de flux solaire corrigé par la nébulosité sont apprises - dans le cas du modèle de Perrin de Brichambaut et Vauge développé précédemment, les valeurs des paramètres a, b, x1 et x2 - et une phase d'apprentissage d'un modèle thermique de bâtiment exploitant les valeurs ainsi déterminées pour lesdits paramètres.

Pour l'une et l'autre de ces phases, le dispositif de la figure 2 peut être utilisé. Un capteur 201 de température, exposé au soleil, fournit la valeur $T_{(soleil)t}$ en temps réel, et un capteur simple 202 de température, situé à l'ombre, fournit la valeur $T_{(ext)t}$ en temps réel. Un autre capteur 203 situé à l'intérieur du bâtiment donne la valeur Tit intérieure du bâtiment en temps réel. Enfin, une mesure réelle du flux solaire incident à l'instant t, ici noté $Q_{s,t}$ peut être également fournie par le capteur 201, ou alternativement par un capteur additionnel dédié, durant la phase d'apprentissage préliminaire des paramètres du modèle de flux solaire. Par exemple, il est possible d'utiliser comme capteur 201 un capteur simple de température, et d'ajouter un pyranomètre placé à une position exposée au soleil durant la phase d'apprentissage préliminaire (ledit pyranomètre n'étant plus nécessaire durant la deuxième phase d'apprentissage du modèle thermique de bâtiment).

La valeur $G_{(cld)t}$ est fournie selon un procédé de détermination indirecte de flux solaire incident conforme au procédé 10 de la figure 1.

Le dispositif mis en place dans le bâtiment B peut, de manière optionnelle, également comprendre un compteur 205 de consommation électrique et un compteur 206 de consommation de gaz du bâtiment.

Le procédé d'apprentissage du premier mode de réalisation, prévoyant la construction itérative des modèles dynamiques de flux solaire et de comportement thermique du bâtiment, est illustré schématiquement sur la **figure 3.**

A partir des mesures des températures $T_{soleil}$ et $T_{ext}$, une valeur estimée de la nébulosité Nt à l'instant t, puis une valeur de flux solaire noté $G_{(cld)t}$ à l'instant t (par exemple en Watts par mètre carré) sont fournies selon les modalités décrites ci-avant en relation à la figure 1.

De plus, l'évolution temporelle dynamique du biais de température $\Delta T_t$ entre les températures $T_{soleil}$ et $T_{ext}$ est modélisée par un modèle d'état linéaire à temps discret, s'exprimant comme suit :

$$\Delta T_t = \eta_t + w_t,$$

avec wt un bruit blanc gaussien de variance r2 où r est un paramètre à déterminer du modèle d'état linéaire, et

$$\eta_t = \eta_{t-1} + (q + \sigma_t)v_t,$$

où $(q+\sigma_t)v_t$ est un bruit d'innovation, c'est-à-dire un bruit permettant d'introduire de la variabilité dans la dynamique de l'état $\eta_t$, q étant un écart-type minimal,
$v_t$ est un bruit blanc gaussien unitaire,
et $\sigma_t$ est un paramètre à déterminer pour le modèle d'état linéaire du biais de température, parmi les paramètres $(\sigma_1,...,\sigma_T)$ où T est le nombre de mesures déjà réalisées pour le biais de température.

Avec ce modèle d'évolution dynamique du biais de température $\Delta T_t$ entre les températures $T_{soleil}$ et $T_{ext}$, la nébulosité est donnée par $N_t = \phi(\eta_t)$ où la fonction $\Phi$ est conforme au modèle exposé ci-avant en relation à l'étape 102 du procédé 10 de la figure 1.

Le flux solaire est donné par $G_{cld,t} = G_{clr,t}(1 - a\phi(\eta_t)^b)$, avec a et b les paramètres définis précédemment pour le modèle théorique de flux solaire incident.

Le paramètre $q$ représente l'écart-type minimal du bruit d'innovation (indépendant du temps $t$), et les valeurs $\sigma_t$ sont en général nulles, sauf quelques valeurs positives qui permettent de prendre en compte des sauts dans la dynamique de $\eta_t$ lorsqu'un changement brusque de couverture nuageuse se produit. Ledit modèle d'évolution dynamique du biais de température $\Delta T_t$ est donc paramétré par un vecteur $\beta = (q,r,\sigma_1,...,\sigma_T)$. De manière préférentielle, le vecteur de paramétrage $\beta$ peut être déterminé, préalablement à l'apprentissage du modèle thermique de bâtiment, notamment pendant la phase d'apprentissage préliminaire, par minimisation d'un critère de vraisemblance pénalisé s'exprimant comme suit :

$$\hat{\beta}(\lambda) = \min_{\beta}\left\{-2\log L_\beta(\Delta T_1, ..., \Delta T_T) + \lambda\sum_{t=1}^{T}|\sigma_t|\right\},$$

où $\lambda$ est un paramètre permettant d'éviter le sur-apprentissage du modèle et $L_\beta(\Delta T_1,...,\Delta T_T)$ est la vraisemblance associée au modèle paramétré par le vecteur $\beta$ comme défini ci-avant.

La détermination des paramètres du modèle dynamique de biais de température correspond donc à un problème d'optimisation. Pour résoudre ce problème, on pourra transposer des outils standard de l'apprentissage statistique. La vraisemblance $L_\beta$ se calcule à l'aide d'un filtre de Kalman. A ce titre, on pourra se référer à publication Nonlinear time series: theory, methods and applications with R examples, R. Douc, E. Moulines et D. Stoffer, CRC Press, 2014. Le paramètre $\lambda$ peut, à titre d'exemple, être sélectionné parmi plusieurs valeurs testées en minimisant un critère d'information d'Akaike (AIC). Enfin, pour la recherche du minimum, on pourra utiliser la boîte à outils MATLAB de Mark Schmidt telle que décrite dans la publication Fast optimization methods for L1 regularization: A comparative study and two new approaches, M. Schmidt, G. Fung et R. Rosales, European Conférence on Machine Learning (ECML), 2007, ou toute autre méthode appropriée connue.

De manière alternative, la phase d'apprentissage préliminaire des paramètres a, b, $x_1$ et $x_2$ du modèle théorique du flux solaire est mise en œuvre par une mesure directe du flux solaire incident dans une zone géographique étendue (à l'aide d'un ou de plusieurs pyranomètres). L'homme de l'art comprendra aisément comment, avec le modèle de Perrin de Brichambaut et Vauge, une pluralité de mesures directes peut permettre de déterminer des valeurs de ces paramètres. Dans ce dernier cas, les valeurs des paramètres a, b, $x_1$, $x_2$ et $\beta$ sont prises uniformes sur toute la zone géographique étendue. Les paramètres a, b, $x_1$, $x_2$ et $\beta$ déterminés pour le modèle de flux théorique incident à l'issue de l'apprentissage peuvent être étendus à d'autres bâtiments, situés préférentiellement en une même zone géographique. Dans ce cas, pour lesdits autres bâtiments, la phase d'apprentissage préliminaire du modèle théorique de flux solaire peut ne pas être mise en œuvre, et le comportement thermique du bâtiment peut être appris directement.

Revenant au procédé d'apprentissage de la figure 3, l'apprentissage s'effectue par le suivi de l'évolution d'un vecteur d'état $X = (T_i, T_s, \xi)$ où on rappelle que $T_i$ est la température intérieure du bâtiment, $T_s$ est une température de structure représentative de l'état thermique de l'enveloppe du bâtiment (pour laquelle il n'est pas nécessairement possible d'avoir accès à une mesure réelle), et $\xi$ correspond à la dynamique du biais de température extérieure (dépendant de la nébulosité). Plus précisément, ici $\xi = \eta$, où $\eta$ est la même grandeur décrite précédemment pour le modèle d'état linéaire à temps discret développé pour l'évolution temporelle du biais de température $\Delta T_t$ entre les températures $T_{ext}$ et $T_{soleil}$. La valeur Xt à l'instant t de ce vecteur d'état est estimée à l'aide :

- Du modèle théorique du flux solaire et du modèle d'évolution dynamique du biais de température décrits ci-avant, s'agissant de l'état $\xi_t$,
- D'un modèle de comportement thermique du bâtiment, s'agissant des températures $T_i$ et $T_s$, ce dernier modèle exploitant préférentiellement une valeur de flux solaire estimée à partir de l'état $\xi_t$, via le modèle théorique de flux solaire.

On pourra très avantageusement utiliser, pour le modèle de comportement thermique du bâtiment, un modèle électrique équivalent RxCy. Il est connu de modéliser de manière dynamique le comportement thermique d'un bâtiment à l'aide d'un modèle de circuit électrique équivalent du type réseau RxCy, dans lequel x et y sont supérieurs ou égaux à 2, à l'aide notamment de données de fonctionnement en boucle ouverte de la température extérieure, ainsi que de données relevées en boucle fermée mais exploitées en boucle ouverte. Ces modèles peuvent notamment servir à déterminer une puissance de chauffage nécessaire pour chauffer l'intérieur du bâtiment.

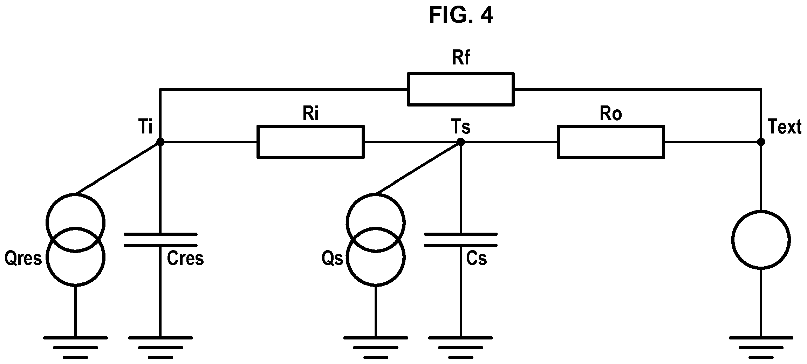

Nous reprenons en **figure 4** un modèle électrique équivalent R3C2. Il est rappelé que d'après l'analogie électrique standard, les températures sont associées à des potentiels du circuit, et les puissances aux courants électriques.

Le modèle de la figure 4 comprend trois résistances Rf, Ri et Ro et deux condensateurs Cs et Cres. Les deux résistances Ri et Ro sont en série sur une branche placée en parallèle de la résistance Rf. Le condensateur Cs relie à la masse le point correspondant à la température Ts de l'enveloppe du bâtiment. Le condensateur Cres relie le point commun aux résistances Rf et Ri, qui correspond à la température intérieure Ti du bâtiment, à la masse. Enfin, un générateur de tension relie le point commun des résistances Rf et Ro, correspondant ici à la température extérieure $T_{ext}$ mesurée à l'ombre, à la masse. Un générateur de courant Qs est placé en parallèle du condensateur Cs, et un générateur de courant Qres est placé en parallèle du condensateur Cres. Les équations différentielles couplées régissant l'évolution des puissances Qs et Qres peuvent être déterminées sans difficulté par l'homme du métier, pour compléter le modèle de comportement thermique du bâtiment.

On pourra alternativement considérer un autre modèle de comportement thermique linéaire, notamment un modèle électrique équivalent de type RxCy, pour le bâtiment B. De manière plus générale, toute représentation d'état linéaire discrète pour les températures intérieure et extérieure du bâtiment pourrait être utilisée. Il pourrait également être envisagé de réaliser un modèle de comportement thermique pour un ensemble de bâtiments, dont un modèle électrique équivalent serait constitué de plusieurs circuits électriques équivalents reliés entre eux.

En conformité avec un tel modèle R3C2, l'évolution dynamique de la température intérieure Ti et de la température de structure $T_s$, selon le modèle dynamique de comportement thermique du bâtiment construit lors de l'apprentissage, est modélisée comme suit.

On note $Q_r$ la somme de la puissance de chauffage et des apports thermiques internes au bâtiment. Le vecteur $U = (T_{ext}\ Q_r\ G_{clr})'$ désigne les sollicitations mesurées du modèle joint du flux solaire et du comportement thermique du bâtiment, et le vecteur $Y = (T_i\ \Delta T_{ext})'$ désigne les sorties du système. Parmi les grandeurs apparaissant dans le vecteur U, les grandeurs $T_{ext}$ et $Q_r$ sont par exemple mesurées directement, tandis que $G_{clr}$ est fourni par exemple à l'aide du modèle de flux solaire développé précédemment.Le vecteur Y est également mesuré (capteurs 201, 202, 203). Les mesures obtenues pour le vecteur Y peuvent être bruitées. Le vecteur Y mesuré est noté Y*. Le vecteur Y correspond donc à une observation en temps réel. Le vecteur d'états cachés (non-mesurés) $X = (T_i\ T_s\ \eta)'$, où $\eta_t$ correspond à $\xi_t$, est divisé en deux sous-vecteurs $\xi_t = \eta_t$ et $a_t = (T_i\ T_s)'$. D'un point de vue statistique, si le modèle global du vecteur d'états X est non-linéaire, du fait de la non-linéarité du modèle de flux solaire, le modèle de bâtiment ($a_t$) est linéaire conditionnellement à l'état $\xi_t$. On a en effet les égalités suivantes :

$$\xi_t = \xi_{t-1} + v_t,$$

$$a_t = f_a(\xi_{t-1}, U_t, \theta) + A_a(\theta)a_{t-1} + \epsilon_t,$$

$$Y_t = [0 \quad \xi_t]' + Ca_t + \varepsilon_t,$$

où il est rappelé que $v_t$ est un bruit blanc gaussien unitaire, la fonction $f_a$ et les matrices $A_a$ et $C$ se déduisent aisément des équations du circuit R3C2, $\epsilon_t$ et $\varepsilon_t$ sont des bruits blancs gaussiens, et $\theta$ correspond au vecteur $\theta = \left(\dfrac{1}{Cres}\ \dfrac{1}{Cs}\ \dfrac{1}{Rf}\ \dfrac{1}{Ro}\ \dfrac{1}{Ri}\right)'$. Revenant à nouveau à la figure 3, pour un instant t de mesure donné, une fois obtenue la valeur estimée du flux solaire, via l'estimation de l'état $\xi_t$, on peut donc obtenir, suivant l'égalité ci-dessus pour le sous-vecteur $a_t$, des valeurs estimées de la température intérieure $T_{it}$ et la température extérieure $T_{st}$. Une valeur ainsi calculée du vecteur d'état $X_t = (T_{it}, T_{st}, \xi_t)$ peut ainsi être obtenue. On peut alors en particulier comparer les valeurs estimées de $T_{it}$ et $\xi_t$ dans le vecteur calculé $Y_t$ avec les valeurs mesurées dans le vecteur observé $Y^*_t$.

Si la différence entre la valeur mesurée $Y^*_t$ et la valeur estimée pour le vecteur observé $Y_t$ est déterminée comme suffisamment faible, par exemple si une distance entre ces deux vecteurs est inférieure à un seuil prédéterminé $\rho$, l'apprentissage conjoint du modèle théorique de flux solaire et du modèle de comportement thermique du bâtiment est considéré comme terminé. On sort alors de la boucle représentée de manière schématique sur la figure 3 pour la phase d'apprentissage des modèles.

Si, à l'inverse, la valeur mesurée et la valeur estimée sont déterminées comme éloignées, on reste dans ladite boucle de la figure 3, et la trajectoire dynamique du flux solaire est ajustée. Par trajectoire dynamique du flux solaire, on entend la dynamique d'évolution du vecteur d'états cachés $X = (T_i\ T_s\ \eta)'$ où il est rappelé que $\eta$ correspond à la dynamique d'évolution du biais de température, dont dépend la valeur estimée du flux solaire selon le modèle développé précédemment. Une nouvelle itération pour le calcul d'une valeur de flux solaire est initiée, et les paramètres du modèle thermique de bâtiment sont mis à jour selon un algorithme d'estimation de modèle, implémenté dans les moyens de calcul ou dans un processeur pouvant communiquer avec les moyens de calcul. On applique préférentiellement l'algorithme EM (Espérance-Maximisation), bien connu dans le domaine technique de l'apprentissage statistique, au cas des modèles d'état gaussiens conditionnellement linéaires. L'estimateur des paramètres $\theta$ est donc un estimateur de maximum de vraisemblance. On pourra réaliser, pour calculer le maximum de vraisemblance, un lissage particulaire de l'état caché non-linéaire, avec prise en compte de la sous-structure linéaire pour réduire la variance de l'estimation (méthode appelée *Rao-Blackwellized Particle Smoother Expectation Maximization*). Cette méthode est décrite par exemple dans la publication Identification of mixed linear/nonlinear state-space models, F. Lindsten et T. B. Schön, 49th IEEE Conférence on Decision and Control, 2010.

L'absence de flux solaire lors des mesures réalisées de nuit implique que le comportement des états $T_i$ et $T_s$ lors de la nuit est exclusivement lié aux sollicitations autres que le flux solaire, qui sont bien mesurées, ce qui permet de renforcer la capacité d'identification conjointe de ce modèle de bâtiment et du modèle théorique de flux solaire.

Il est à noter qu'une estimation de flux solaire incident selon le modèle appris ne nécessite pas l'usage d'un pyranomètre. Comme indiqué précédemment, les paramètres a, b, $x_1$, $x_2$ et $\beta$ déterminés pour le modèle de flux théorique incident à l'issue de l'apprentissage peuvent être étendus à d'autres bâtiments, situés préférentiellement en une même zone géographique. Cela permet de limiter l'usage du pyranomètre. Les paramètres déterminés à l'issue de l'apprentissage pour le modèle thermique de bâtiment peuvent également être élargis à d'autres bâtiments similaires.

*Estimation d'un flux solaire incident futur*

Dans un deuxième mode de réalisation, on s'intéresse à la prédiction du flux solaire incident sur des périodes temporelles futures, pour une unité de production électrique exploitant la puissance du rayonnement solaire, typiquement une centrale de production photovoltaïque. En effet, moyennant la prise en compte de l'orientation du flux solaire incident, le rendement d'une telle installation est fortement corrélé au flux solaire incident, qui, comme vu ci-avant, est lui-même corrélé à la nébulosité.

Un intérêt d'utiliser un modèle théorique de flux solaire incident, ne prenant pas en compte l'état de fonctionnement de la centrale de production - défauts sur des panneaux photovoltaïques, vieillissement de l'installation, salissures... - est de permettre une comparaison de la puissance théorique avec la puissance effective observée.

Une telle comparaison permet de remonter à des données d'état de fonctionnement de la centrale de production

Avantageusement, on pourra répartir plusieurs capteurs de température (et ainsi obtenir plusieurs mesures de biais de température) à plusieurs localisations, notamment pour un site de production vaste. Les données de nébulosité ainsi estimées en temps réel en plusieurs points du site de production peuvent permettre d'extrapoler une estimation d'une direction et d'une vitesse de déplacement des nuages.

Un système selon cette dernière variante permet, outre la possibilité de prédire de manière fiable la puissance produite globalement par l'unité de production sans utiliser de pyranomètre, de prédire à court terme des évolutions de la production globale ou en des zones précises de l'unité de production, en fonction du déplacement estimé des nuages.

*Détermination instantanée d'un flux solaire incident*

Dans un troisième mode de réalisation, un objectif est d'estimer en temps réel le flux solaire incident en plusieurs zones d'une centrale solaire thermodynamique à concentration, ou centrale solaire à miroirs. Dans une telle installation, le rayonnement solaire est focalisé sur une surface de chauffe. Il est crucial de contrôler finement la puissance de rayonnement concentrée sur la surface de chauffe : cette puissance doit être suffisante pour entraîner la montée en température souhaitée, mais maîtrisée afin de ne pas endommager ladite surface de chauffe ou les miroirs.

Dans ce contexte, des variations rapides de la couverture nuageuse au-dessus de l'installation posent de grandes difficultés pour la réorientation adéquate des miroirs. La variation de nébulosité peut être trop rapide pour permettre la ré-orientation en temps utile des miroirs. Il est courant, face à ces difficultés, de mettre hors service l'installation toute entière dans des périodes de grande variation de couverture nuageuse, en attendant un retour au plein soleil.

Le procédé de détermination indirecte de flux solaire décrit ci-avant, ainsi que le procédé d'apprentissage des paramètres du modèle théorique de flux solaire, peuvent très avantageusement être utilisés pour obtenir une cartographie précise du flux solaire différenciée sur plusieurs blocs de miroirs de la centrale solaire à concentration, et/ou une cartographie de la nébulosité différenciée sur plusieurs blocs de miroirs.

On pourra notamment utiliser à cette fin un dispositif conforme à celui décrit précédemment en relation au procédé 10 de la figure 1, ou une pluralité de tels dispositifs, comprenant un capteur de température situé au soleil et un capteur situé à l'ombre ainsi que des moyens de calcul, interfacés avec une pluralité de dispositifs de commande d'orientation de miroirs (typiquement un dispositif de commande pour chaque bloc de miroirs).

De manière avantageuse, au moins un capteur de température extérieure pour chaque bloc de miroirs est disposé à un emplacement exposé au soleil.

De manière optionnelle, le déplacement des nuages au-dessus de la centrale thermodynamique à miroirs peut être anticipé, ce qui octroie un temps d'avance pour réorienter les miroirs de façon adéquate et contrôler la puissance concentrée sur la surface de chauffe. Un dispositif de pilotage de l'orientation de chaque miroir ou bloc de miroirs peut être contrôlé à l'aide de la valeur acquise correspondante de flux solaire, ou la valeur acquise correspondante de nébulosité.

Une implémentation possible pour mesurer le déplacement des nuages consiste à mesurer de manière simultanée ou séquentielle le flux solaire incident en une pluralité de points d'une zone, avec une estimation de nébulosité pour chacun de ladite pluralité de points, selon un procédé conforme au procédé 10 de la figure 1, et en ajoutant une étape supplémentaire d'estimation d'une vitesse de déplacement des nuages au-dessus de ladite zone, cette étape supplémentaire prenant en entrée les estimations de nébulosité en chacun des points.

Les trois modes de réalisation présentés ci-avant ne sont pas restrictifs quant à l'utilisation qui est faite du flux solaire estimé : un flux solaire incident pourra être estimé selon le procédé de détermination indirecte exposé ci-avant, en temps réel ou pour des périodes futures, ou bien reconstitué pour des périodes passées, dans le contexte de l'un quelconque de ces trois modes de réalisation.

Par ailleurs, un autre modèle de flux solaire incident que le modèle de Perrin de Brichambaut et Vauge peut être exploité. On citera par exemple le modèle de Kasten, qui dépend d'un facteur de trouble de Linke, pour lequel l'homme du métier saura transposer le procédé d'apprentissage décrit ci-avant. Ce modèle est décrit dans la publication Selecting a clear-sky model to accurately map solar radiation from satellite images, C. Rigollier et L. Wald, EARSeL Symposium 1999 "Remote sensing in the 21st Century: economic and environmental applications", Valladolid, 2000.

Le modèle d'évolution dynamique du biais de température exposé ci-avant n'est pas non plus limitatif. On pourra notamment considérer le modèle suivant :

$$\Delta T_t = \eta_t + w_t,$$

avec wt un bruit blanc gaussien de variance r$^2$ où r est un paramètre à déterminer du modèle, et

$$\eta_t = \eta_{t-1} + \mu_t + q v_t,$$

où q et vt sont pris identiques au modèle précédemment décrit, et $\mu_t$ est nul en moyenne, sauf pour des périodes très brèves pour tenir compte d'éventuels changements de couverture nuageuse.

## Revendications

1.  Dispositif de détermination indirecte du flux solaire incident sur une structure,
    le dispositif comprenant des moyens de calcul (210) de flux solaire, un premier capteur de température extérieure (201) situé à un emplacement exposé au rayonnement solaire, et un deuxième capteur de température extérieure (202) situé à l'ombre,
    les moyens de calcul (210) recevant en entrée une valeur de biais de température, définie comme la différence entre les températures mesurées par le premier capteur et le deuxième capteur,
    le dispositif étant **caractérisé en ce que** les moyens de calcul sont configurés pour réaliser une estimation de valeur de nébulosité en fonction de ladite valeur de biais de température,
    et sont configurés pour calculer un flux solaire estimé selon un modèle théorique, en fonction de la valeur estimée de nébulosité et d'un flux solaire par temps clair prédéterminé.

2.  Dispositif de détermination indirecte de flux solaire selon la revendication 1, comprenant en outre une base de données configurée pour construire un modèle dynamique de flux solaire,
    ledit modèle dynamique étant construit par apprentissage d'un modèle d'évolution temporelle dynamique du biais de température.

3.  Dispositif de détermination indirecte de flux solaire selon l'une des revendications 1 ou 2, dans lequel l'apprentissage du modèle dynamique de flux solaire est réalisé conjointement à un apprentissage d'un modèle de comportement de la structure,
    la valeur courante du flux solaire étant une donnée d'entrée pour la détermination du comportement de la structure,
    le modèle dynamique de flux solaire et le modèle de comportement de la structure étant construits à l'aide des mesures réalisées par le premier capteur et le deuxième capteur.

4.  Dispositif de détermination indirecte de flux solaire selon la revendication 3, dans lequel la structure est un bâtiment, et le modèle de comportement est un modèle thermique du bâtiment,
le dispositif comprenant en outre une sonde de température intérieure du bâtiment (203), et de préférence un compteur de consommation électrique (205) et/ou un compteur de consommation de gaz (206) du bâtiment.

5. Dispositif de détermination indirecte de flux solaire selon la revendication 4, dans lequel le modèle thermique du bâtiment est linéaire, et correspond de préférence à un modèle électrique équivalent de type RxCy.

6. Dispositif de détermination indirecte de flux solaire selon l'une des revendications 1 à 3, dans lequel la structure est un panneau photovoltaïque,
le dispositif de détermination de flux solaire s'interfaçant avec un dispositif de commande du panneau photovoltaïque.

7. Dispositif de détermination indirecte de flux solaire selon l'une des revendications 1 à 3, dans lequel la structure est une centrale solaire thermodynamique à miroirs,
la centrale à miroirs présentant une pluralité de blocs de miroirs, et le dispositif de détermination de flux solaire s'interfaçant avec une pluralité de dispositifs de commande d'orientation de miroirs.

8. Dispositif selon la revendication 7, comprenant pour chaque bloc de miroirs au moins un capteur de température extérieure situé à un emplacement exposé au soleil.

9. Procédé de détermination indirecte du flux solaire incident sur une structure, le procédé comprenant les étapes suivantes :

mesure de température (101) par un premier capteur de température extérieure situé à un emplacement exposé au rayonnement solaire, et par un deuxième capteur de température extérieure situé à l'ombre, et détermination d'une valeur de biais de température, définie comme la différence entre les températures mesurées par le premier capteur et le deuxième capteur,
estimation (102), par des moyens de calcul, d'une valeur courante de nébulosité en fonction de ladite valeur de biais de température,
et calcul (103) par lesdits moyens de calcul d'une valeur du flux solaire incident sur la structure, d'après un modèle théorique de flux solaire prédéterminé, ledit modèle tenant compte de la valeur courante de nébulosité et d'un flux solaire par temps clair prédéterminé.

10. Procédé de détermination indirecte de flux solaire selon la revendication 9, dans lequel le flux solaire incident calculé $G_{cld}$ est exprimé en fonction de la valeur de nébulosité N et d'un flux solaire par temps clair $G_{clr}$ selon le modèle suivant :

$$G_{cld} = G_{clr}(1 - aN^b),$$

où le flux solaire par temps clair $G_{clr}$ peut être déterminé en fonction de coordonnées géographiques des capteurs de température, et d'un repérage temporel de la mesure,
a et b étant des paramètres à déterminer pour le modèle théorique de flux solaire.

11. Procédé de détermination indirecte de flux solaire selon l'une des revendications 9 ou 10, dans lequel l'estimation de la valeur de nébulosité N en fonction de la valeur de biais de température $\Delta T$ est réalisée selon le modèle suivant :

$$N = \phi(\Delta T),$$

avec $\Phi$ la fonction suivante :

$$\phi(x) = 1 - \frac{1}{1 + \exp\left(-\alpha(x - x_0)\right)}$$

avec $x_0 = (x_1 + x_2)/2$
et $\alpha = 4/(x_2 - x_1)$
où $x_1$ et $x_2$ sont des valeurs seuil à déterminer pour le modèle de la nébulosité.

**12.** Procédé de détermination indirecte de flux solaire selon l'une des revendications 9 à 11, comportant une étape préliminaire de détermination de paramètres du modèle théorique du flux solaire à l'aide d'une mesure directe de flux solaire incident dans une zone géographique étendue, les paramètres déterminés étant pris égaux sur toute la zone géographique étendue.

**13.** Procédé de détermination indirecte de flux solaire selon l'une des revendications 9 à 12, dans lequel le modèle théorique de flux solaire est un modèle dynamique,
ledit modèle dynamique étant construit par apprentissage d'un modèle d'évolution temporelle dynamique du biais de température.

**14.** Procédé de détermination indirecte de flux solaire selon la revendication 13, dans lequel le modèle d'évolution temporelle dynamique du biais de température $\Delta T_t$ selon le temps t est le modèle d'état linéaire à temps discret comme suit :

$$\Delta T_t = \eta_t + w_t,$$

avec $w_t$ un bruit blanc gaussien de variance $r^2$ avec r un paramètre à déterminer,
et avec $\eta_t = \eta_{t-1} + (q + \sigma_t)v_t,$

où q est un écart-type minimal à déterminer d'un bruit d'innovation, c'est-à-dire un bruit permettant d'introduire de la variabilité dans la dynamique de l'état $\eta_t$, q étant un écart-type minimal à déterminer,
$v_t$ est un bruit blanc gaussien unitaire,
et $\sigma_t$ est un paramètre à déterminer,
ledit modèle d'état linéaire à temps discret du biais de température étant paramétré par un vecteur $(q, r, \sigma_1, ..., \sigma_T)$ avec T le nombre de mesures réalisées pour le biais de température,
ledit vecteur étant déterminé par minimisation d'un critère de vraisemblance associé au modèle d'évolution temporelle dynamique du biais de température.

**15.** Procédé de détermination indirecte de flux solaire selon l'une des revendications 9 à 14, le procédé étant mis en œuvre de manière simultanée ou séquentielle pour la détermination du flux solaire incident en une pluralité de points d'une zone, avec une estimation de nébulosité pour chacun de ladite pluralité de points, le procédé comprenant une étape supplémentaire d'estimation d'une vitesse de déplacement des nuages au-dessus de ladite zone, cette étape supplémentaire prenant en entrée les estimations de nébulosité en chacun des points.

**Patentansprüche**

**1.** Vorrichtung zur indirekten Bestimmung des einfallenden Solarstroms auf eine Struktur,
wobei die Vorrichtung Solarstrom-Berechnungsmittel (210), einen ersten Außentemperatursensor (201), der sich an einer Stelle befindet, die der Sonnenstrahlung ausgesetzt ist, und einen zweiten Außentemperatursensor (202), der sich im Schatten befindet, umfasst,
wobei die Berechnungsmittel (210) am Eingang einen Temperaturmessabweichungswert empfangen, der als die Differenz zwischen den durch den ersten Sensor und den zweiten Sensor gemessenen Temperaturen definiert ist,
wobei die Vorrichtung **dadurch gekennzeichnet ist, dass** die Berechnungsmittel konfiguriert sind, um eine Schätzung eines Bewölkungswertes in Abhängigkeit von dem Temperaturmessabweichungswert zu realisieren,
und konfiguriert sind, um einen geschätzten Solarstrom entsprechend einem theoretischen Modell in Abhängigkeit von dem Bewölkungsschätzwert und eines Solarstroms bei vorbestimmtem klarem Wetter zu berechnen.

**2.** Vorrichtung zur indirekten Bestimmung eines Solarstroms nach Anspruch 1, weiter eine Datenbank umfassend, die konfiguriert ist, um ein dynamisches Modell eines Solarstroms zu konstruieren,
wobei das dynamische Modell durch Lernen eines dynamischen zeitlichen Entwicklungsmodells der Temperaturmessabweichung konstruiert wird.

**3.** Vorrichtung zur indirekten Bestimmung eines Solarstroms nach Anspruch 1 oder 2, wobei das Lernen des dynamischen Modells eines Solarstroms gemeinsam mit einem Lernen eines Verhaltensmodells der Struktur realisiert wird,
wobei der aktuelle Wert des Solarstroms ein Eingangsdatum zur Bestimmung des Verhaltens der Struktur ist,
wobei das dynamische Modell eines Solarstroms und das Verhaltensmodell der Struktur mithilfe der Messungen konstruiert werden, die durch den ersten Sensor und den zweiten Sensor realisiert werden.

4. Vorrichtung zur indirekten Bestimmung eines Solarstroms nach Anspruch 3, wobei die Struktur ein Gebäude ist und das Verhaltensmodell ein thermisches Modell des Gebäudes ist,
   wobei die Vorrichtung weiter eine Innentemperatursonde (203) und vorzugsweise einen Stromverbrauchszähler (205) und/oder einen Gasverbrauchszähler (206) des Gebäudes umfasst.

5. Vorrichtung zur indirekten Bestimmung eines Solarstroms nach Anspruch 4, wobei das thermische Modell des Gebäudes linear ist, und vorzugsweise einem äquivalenten elektrischen Modell vom Typ RxCy entspricht.

6. Vorrichtung zur indirekten Bestimmung eines Solarstroms nach einem der Ansprüche 1 bis 3, wobei die Struktur ein Solarkollektor ist,
   wobei die Vorrichtung zur Bestimmung eines Solarstrom eine Schnittstelle mit einer Steuervorrichtung des Solarkollektors aufweist.

7. Vorrichtung zur indirekten Bestimmung eines Solarstroms nach einem der Ansprüche 1 bis 3, wobei die Struktur ein thermodynamisches Solarkraftwerk mit Spiegeln ist,
   wobei das Kraftwerk mit Spiegeln eine Vielzahl von Spiegelblöcken aufweist, und die Vorrichtung zur Bestimmung eines Solarstroms eine Schnittstelle mit einer Vielzahl von Steuervorrichtungen zur Spiegelausrichtung aufweist.

8. Vorrichtung nach Anspruch 7, für jeden Spiegelblock mindestens einen Außentemperatursensor umfassend, der sich an einer Stelle befindet, die der Sonne ausgesetzt ist.

9. Verfahren zur indirekten Bestimmung des einfallenden Solarstroms auf eine Struktur, wobei das Verfahren die folgenden Schritte umfasst:

   Messen einer Temperatur (101) durch einen ersten Außentemperatursensor, der sich an einer Stelle befindet, die der Sonnenstrahlung ausgesetzt ist, und durch einen zweiten Außentemperatursensor, der sich im Schatten befindet, und Bestimmen eines Temperaturmessabweichungswerts, der als die Differenz zwischen den durch den ersten Sensor und den zweiten Sensor gemessenen Temperaturen definiert ist,
   Schätzen (102), durch Berechnungsmittel, eines aktuellen Bewölkungswertes in Abhängigkeit von dem Temperaturmessabweichungswert,
   und Berechnen (103), durch die Berechnungsmittel, eines Wert des auf die Struktur einfallenden Solarstroms, nach einem theoretischen Modell eines vorbestimmten Solarstroms, wobei das Modell den aktuellen Wert einer Bewölkung und eines Solarstroms bei vorbestimmtem klarem Wetter berücksichtigt.

10. Verfahren zur indirekten Bestimmung eines Solarstroms nach Anspruch 9, wobei der berechnete einfallende Solarstrom $G_{cld}$ in Abhängigkeit von dem Wert einer Bewölkung N und eines Solarstroms bei klarem Wetter $G_{clr}$ gemäß dem folgenden Modell ausgedrückt wird:

$$G_{cld} = G_{clr}(1 - aN^b),$$

   wobei der Solarstrom bei klarem Wetter $G_{clr}$ in Abhängigkeit von den geografischen Koordinaten der Temperatursensoren und einer zeitlichen Markierung der Messungen bestimmt werden kann,
   wobei a und b zu bestimmende Parameter für das theoretische Modell eines Solarstroms sind.

11. Verfahren zur indirekten Bestimmung eines Solarstroms nach einem der Ansprüche 9 oder 10, wobei die Schätzung des Werts einer Bewölkung N in Abhängigkeit von dem Temperaturmessabweichungswert $\Delta T$ gemäß dem folgenden Modell realisiert wird:

$$N = \phi(\Delta T),$$

   mit $\phi$ die folgende Funktion:

$$\phi(x) = 1 - \frac{1}{1+exp(-\alpha(x-x_0))}$$

mit $x_0 = (x_1 + x_2)/2$
und $\alpha = 4/(x_2 - x_1)$
wobei $x_1$ und $x_2$ zu bestimmende Schwellenwerte für das Modell der Bewölkung sind.

12. Verfahren zur indirekten Bestimmung eines Solarstroms nach einem der Ansprüche 9 bis 11, einen vorbereitenden Schritt zum Bestimmen von Parametern des theoretischen Modells des Solarstroms, mithilfe einer direkten Messung eines einfallenden Solarstroms in eine erweiterte geografische Zone beinhaltend, wobei die bestimmten Parameter in der gesamten erweiterten geografischen Zone gleich angenommen werden.

13. Verfahren zur indirekten Bestimmung eines Solarstroms nach einem der Ansprüche 9 bis 12, wobei das theoretische Modell eines Solarstroms ein dynamisches Model ist,
wobei das dynamische Modell durch Lernen eines dynamischen zeitlichen Entwicklungsmodells der Temperaturmessabweichung konstruiert wird.

14. Verfahren zur indirekten Bestimmung eines Solarstroms nach Anspruch 13, wobei das Modell der dynamischen zeitlichen Entwicklung der Temperaturmessabweichung $\Delta T_t$ gemäß der Zeit t das lineare Zustandsmodell zur diskreten Zeit, wie folgt ist:

$$\Delta T = \eta_t + w_t,$$

mit $w_t$ als Gaußschem weißen Rauschen einer Varianz $r^2$, mit r als zu bestimmendem Parameter,
und mit $\eta_t = \eta_{t-1} + (q + \sigma_t)v_t,$

wobei q eine zu bestimmende minimale typische Abweichung eines Innovationsrauschens, das heißt eines Rauschens ist, das es ermöglicht, Variabilität in die Dynamik des Zustands $\eta_t$ einzubringen, wobei q eine zu bestimmende minimale typische Abweichung ist,
$v_t$ ein einheitliches Gaußsches weißen Rauschen ist,
und $\sigma_t$ ein zu bestimmender Parameter ist,
wobei das das lineare Zustandsmodell zur diskreten Zeit der Temperaturmessabweichung durch einen Vektor $(q, r, \sigma_1, ... \sigma_T)$ parametriert wird, mit T als Anzahl der realisierten Messungen für die Temperaturmessabweichung,
wobei der Vektor durch Minimierung eines Wahrscheinlichkeitskriteriums bestimmt wird, das dem dynamischen zeitlichen Entwicklungsmodell der Temperaturmessabweichung zugeordnet ist.

15. Verfahren zur indirekten Bestimmung eines Solarstroms nach einem der Ansprüche 9 bis 14, wobei das Verfahren auf simultane oder sequenzielle Art für die Bestimmung des einfallenden Solarstroms an einer Vielzahl von Punkten einer Zone umgesetzt wird, mit einer Schätzung einer Bewölkung für jeden der Vielzahl von Punkten,
wobei das Verfahren einen zusätzlichen Schritt zum Schätzen einer Fortbewegungsgeschwindigkeit der Wolken oberhalb der Zone umfasst, wobei dieser zusätzliche Schritt am Eingang die Schätzungen einer Bewölkung an jedem der Punkte annimmt.

## Claims

1. Device for the indirect determination of the incident solar flux on a structure,
the device comprising means for calculating (210) solar flux, a first external temperature sensor (201) located at a location exposed to solar radiation, and a second external temperature sensor (202) located in the shade,
the means for calculating (210) receiving as input a temperature bias value, defined as the difference between the temperatures measured by the first sensor and the second sensor,
the device being **characterised in that** the means for calculating are configured to carry out an estimation of the cloudiness value based on said temperature bias value,
and are configured to calculate a solar flux estimated according to a theoretical model, based on the estimated cloudiness value and on a predetermined solar flux in clear weather.

**2.** Device for the indirect determination of solar flux according to claim 1, further comprising a database configured to construct a solar flux dynamic model, said dynamic model being constructed by learning a dynamic temporal evolution model of the temperature bias.

**3.** Device for the indirect determination of solar flux according to one of claims 1 or 2, wherein the learning of the solar flux dynamic model is carried out jointly with a learning of a behaviour model of the structure, the current value of the solar flux serving as input data for determining the behaviour of the structure, the solar flux dynamic model and the behaviour model of the structure being constructed from measurements taken by the first sensor and the second sensor.

**4.** Device for the indirect determination of solar flux according to claim 3, wherein the structure is a building, and the behaviour model is a thermal model of the building, the device further comprising an internal temperature probe of the building (203), and preferably an electric consumption meter (205) and/or a gas consumption meter (206) of the building.

**5.** Device for the indirect determination of solar flux according to claim 4, wherein the thermal model of the building is linear, and corresponds preferably to an equivalent electric model of the RxCy type.

**6.** Device for the indirect determination of solar flux according to one of claims 1 to 3, wherein the structure is a photovoltaic panel, wherein the device for determining solar flux interfaces with a control device of the photovoltaic panel.

**7.** Device for the indirect determination of solar flux according to one of claims 1 to 3, wherein the structure is a thermodynamic solar power plant with mirrors, the mirror power plant having a plurality of blocks of mirrors, wherein the device for determining solar flux interfaces with a plurality of devices for controlling the orientation of mirrors.

**8.** Device according to claim 7, comprising for each block of mirrors at least one external temperature sensor located at a location exposed to the sun.

**9.** Method for the indirect determination of the incident solar flux on a structure, the method comprising the following steps:

measuring the temperature (101) by a first external temperature sensor located at a location exposed to solar radiation, and by a second external temperature sensor located in the shade, and determining a temperature bias value, defined as the difference between the temperatures taken by the first sensor and the second sensor, estimating (102), by calculation means, a current cloudiness value based on said temperature bias value, and calculating (103) by said calculation means a value of the incident solar flux on the structure, according to a predetermined solar flux theoretical model, said model taking account of the current value of cloudiness and a predetermined solar flux in clear weather.

**10.** Method for the indirect determination of solar flux according to claim 9, wherein the calculated incident solar flux $G_{cld}$ is expressed based on the cloudiness value N and on a solar flux in clear weather $G_{clr}$ according to the following model:

$$G_{cld} = G_{clr}(1 - aN^b),$$

where the solar flux in clear weather $G_{clr}$ can be determined based on the geographical coordinates of the temperature sensors, and a time-stamping of the measurement, a and b being parameters to be determined for the solar flux theoretical model.

**11.** Method for the indirect determination of solar flux according to one of claims 9 or 10, wherein the estimation of the cloudiness value N based on the temperature bias value $\Delta T$ is carried out according to the following model:

$$N = \phi(\Delta T),$$

with $\phi$ the following function:

$$\phi(x) = 1 - \frac{1}{1 + \exp(-\alpha(x - x_0))}$$

with $x_0 = (x_1 + x_2)/2$
and $\alpha = 4/(x_2 - x_1)$
where $x_1$ and $x_2$ are threshold values to be determined for the cloudiness model.

12. Method for the indirect determination of solar flux according to one of claims 9 to 11, including a preliminary step of determining parameters of the theoretical model of the solar flux from a direct measurement of incident solar flux in an extended geographical zone, the determined parameters being taken as equal over the entire extended geographical zone.

13. Method for the indirect determination of solar flux according to one of claims 9 to 12, wherein the solar flux theoretical model is a dynamic model,
said dynamic model being constructed by learning a dynamic temporal evolution model of the temperature bias.

14. Method for the indirect determination of solar flux according to claim 13, wherein the dynamic temporal evolution model of the temperature bias $\Delta T_t$ according to time t is the discrete-time linear state model as follows:

$$\Delta T_t = \eta_t + w_t,$$

with $w_t$ a white Gaussian noise of variance $r^2$ with r a parameter to be determined,
and with $\eta_t = \eta_{t-1} | (q | \sigma_t) v_t,$

where q is a minimum standard deviation to be determined from an innovation noise, i.e. a noise that makes it possible to introduce variability into the dynamics of the state $\eta_t$, q being a minimum standard deviation to be determined,
$v_t$ is a unitary white Gaussian noise,
and $\sigma_t$ is a parameter to be determined,
said discrete-time linear state model of the temperature bias being configured by a vector (q, r, $\sigma_1$, ...,$\sigma_T$) with T the number of measurements taken for the temperature bias,
said vector being determined by minimising a likelihood criterion associated with the dynamic temporal evolution model of the temperature bias.

15. Method for the indirect determination of solar flux according to one of claims 9 to 14, the method being implemented simultaneously or sequentially for determining the incident solar flux in a plurality of points of a zone, with an estimation of the cloudiness for each of said plurality of points, the method comprising an additional step of estimating a displacement speed of the clouds above said zone, this additional step taking as input the cloudiness estimations at each of the points.

FIG. 1

FIG. 2

EP 3 460 534 B1

**FIG. 3**

Mesure
de température
à l'ombre **T(ext)t**

Mesure
de température
au soleil **T(soleil)**
sur l'enveloppe
du bâtiment **B**

Valeur estimée
de nébulosité **Nt**

Valeur de flux
solaire **G(cld)t**
selon le modèle
de flux solaire

Mise à jour du
modèle de
comportement du
bâtiment **B**,
et calcul du
vecteur d'état **X** et
de l'observation **Y**

Mise à jour de la
trajectoire
du flux solaire

**Si ||Y* - Y|| ≥ ρ**

Calcul de
distance
entre valeur
calculée **Y**
et valeur
mesurée **Y***

Mesure de
l'observation **Y*** :
température
intérieure **Tit**,
biais de
température
extérieure **ΔT$_t$**

**Si ||Y* - Y|| < ρ**

Apprentissage
terminé
du modèle
de flux solaire,
et du modèle
de comportement
du bâtiment **B**

FIG. 4

EP 3 460 534 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2505831 A

- WO 0238284 A

**Littérature non-brevet citée dans la description**

- **P. JIMÉNEZ-PEREZ ; L. MORA-LÓPEZ.** Modeling and forecasting hourly global solar radiation using clustering and classification techniques. *Solar Energy,* 2016, vol. 135, 682-691
- **D. YANG ; C. GU ; Z. DONG ; P. JIRUTITIJAROEN ; N. CHEN ; W. M. WALSH.** Solar irradiance forecasting using spatial-temporal covariance structures and time-forward kriging. *Renewable Energy,* 2013, 235-245
- **T. INOUE ; T. SASAKI ; T. WASHIO.** Spatio-temporal kriging of solar radiation incorporating direction and speed of cloud movement. *The 26th Annual Conférence of the Japanese Society for Artificial Intelligence,* 2012
- **Z. RAMEDANI ; M. OMID ; A. KEYHANI ; S. SHAMSHIRBAND ; B. KHOSHNEVISAN.** Potential of radial basis function based support vector regression for global solar radiation prediction. *Renewable and Sustainable Energy Reviews,* 2014, vol. 39, 1005-1011
- **T. BERTHOU ; P. STABAT ; R. SALVAZET ; D. MARCHIO.** Development and validation of a gray box model to predict thermal behavior of occupied office buildings. *Energy and Buildings,* 2014, 91-100

- **T. BERTHOU.** Développement de modèles de bâtiment pour la prévision de charge de climatisation et l'élaboration de stratégies d'optimisation énergétique et d'effacement. *Ecole Nationale Supérieure des Mines de Paris,* 2013
- **A. DUFFIE ; W. A. BECKMAN.** Solar engineering of thermal processes. Wiley, 2013
- **R. DOUC ; E. MOULINES ; D. STOFFER.** Nonlinear time series: theory, methods and applications with R examples. CRC Press, 2014
- **M. SCHMIDT ; G. FUNG ; R. ROSALES.** Fast optimization methods for L1 regularization: A comparative study and two new approaches. *European Conférence on Machine Learning (ECML),* 2007
- **F. LINDSTEN ; T. B. SCHÖN.** Identification of mixed linear/nonlinear state-space models. *IEEE Conférence on Decision and Control,* 2010
- **C. RIGOLLIER ; L. WALD.** Selecting a clear-sky model to accurately map solar radiation from satellite images. *EARSeL Symposium,* 1999
- Remote sensing in the 21st Century: economic and environmental applications. *Valladolid,* 2000